# EUROPÄISCHE PATENTSCHRIFT

(11) **EP 3 830 207 B1**
(45) Veröffentlichungstag und Bekanntmachung des Hinweises auf die Patenterteilung: **19.02.2025**
(21) Anmeldenummer: 19749308.3
(22) Anmeldetag: 31.07.2019
(51) Int. Cl.: C09J 7/38, B01L 3/00, B41J 2/175, C09J 163/00

(54) **SYSTEM MIT EINER MIKROFLUIDISCHEN KARTUSCHE UND EINER KARTUSCHENABDECKVORRICHTUNG ZUM VERSIEGELN DER MIKROFLUIDISCHEN KARTUSCHE UND VERFAHREN ZU SEINER HERSTELLUNG**
SYSTEM COMPRISING A MICROFLUIDIC CARTRIDGE AND A CARTRIDGE COVERING ELEMENT FOR SEALING OFF A MICROFLUIDIC CARTRIDGE AND PROCESS FOR ITS PRODUCTION
DISPOSITIF COMPRENANT UNE CARTOUCHE MICROFLUIDIQUE ET UNE COUVERTURE DE CARTOUCHE DESTINÉ À SCELLER UNE CARTOUCHE MICROFLUIDIQUE ET SON PROCÉDÉ DE FABRICATION

(30) Priorität: 31.07.2018 DE 102018118581
(43) Veröffentlichungstag der Anmeldung: 09.06.2021
(73) Patentinhaber: Lohmann GmbH & Co. KG, 56567 Neuwied (DE)
(72) Erfinder: KÜHL, Oliver, 56587 Straßenhaus (DE); SCHINDLER, Kerstin, 53578 Rederscheid (DE); SUNDRUM, Cornelia, 56068 Koblenz (DE); ROTHER, Raimund, 79117 Freiburg (DE); STRELLER, Rouven, 79856 Hinterzarten (DE)
(74) Vertreter: Okoampah, Rene
(86) Internationale Anmeldenummer: PCT/EP2019/070622
(87) Internationale Veröffentlichungsnummer: WO 2020/025670

(56) Entgegenhaltungen:
- WO-A1-2017/174303
- WO-A1-2018/153985
- US-A1- 2003 081 090
- US-A1- 2015 184 034
- KOSSE D.: "Microthermoforming and Sealing of COP Films to Form Thin Walled Lab-on-a-chip Cartridges", PROCEEDINGS OF THE 8TH INTERNATIONAL CONFERENCE ON MULTI-MATERIAL MICRO MANUFACTURE, 1 January 2011 (2011-01-01), pages 1 - 4, XP093221615

## Beschreibung

### Technisches Gebiet

Die vorliegende Erfindung betrifft ein System mit einer mikrofluidischen Kartusche und einer Kartuschenabdeckvorrichtung zum Versiegeln der mikrofluidischen Kartushce sowie ein Verfahren zur Herstellung des Systems.

Die in den nachfolgenden Ausführungen verwendeten Begriffe sind dabei wie folgt zu verstehen:
Mit "klebender Film" ist im Folgenden jede Form von flächigen klebenden Systemen gemeint, also nicht nur Klebebänder im engeren Sinne, sondern auch Klebefolien, Klebestreifen, Klebeplatten oder klebende Stanzteile.

"Haftklebend" werden solche Klebeverbindungen genannt, bei denen die beiden Fügepartner durch eine dazwischen liegende Klebeschicht und unter Druck miteinander verbunden werden. Die Verbindung ist in der Weise reversibel, dass sie wieder gelöst werden kann, ohne die beiden Fügepartner zu beschädigen, weil die Klebenaht die schwächste Stelle in der Fügeverbindung ist.

Als "strukturell" werden Klebeverbindungen bezeichnet, bei welchen die Fügepartner in der Weise miteinander verbunden werden, dass bei einer Trennung die Verbindung nicht unbedingt an der Klebenaht gelöst wird, sondern unter Umständen auch einer der Fügepartner die schwächste Stelle in der Verbindung sein kann und durch die Trennung dann beschädigt wird. Strukturelle Klebeverbindungen besitzen also hohe Festigkeiten. Die Festigkeiten, gemessen im quasistatischen Zug- Scherversuch, liegen bei strukturellen Verbindungen über 6 MPa. Übliche Werte, die für strukturelle Klebeverbindungen von Epoxidklebstoffen angestrebt werden, liegen bei 30 MPa. Unter UV-Strahlung wird im vorliegenden Falle Strahlung im Wellenlängenbereich von UV Licht, insbesondere des "UVA"- oder "UVC"-Lichts verstanden. UVA-Strahlung liegt im Wellenbereich von ca. 380 bis 315 Nanometer (nm), UVC-Strahlung liegt im Wellenbereich von ca 280 bis 100 nm Generell handelt es sich bei beiden um elektromagnetische Strahlung mit Wellenlängen, die kürzer als das sichtbare Licht sind. Bei UVA-Licht liegt der Energieeintrag bei ca. 3,26 bis 3,95 Elektronenvolt (eV), bei UVC-Licht bei ca. 4,43 bis 12,40 eV.

"Aktivierung" bedeutet, dass der Klebstoff nach Bestrahlung mit UV-Licht beginnt auszuhärten, d.h. die im Klebstoff befindlichen Fotoinitiatoren werden durch Lichteinstrahlung aktiviert und stoßen den Aushärteprozess an, indem sie die Bildung von Polymerketten einleiten. Üblicherweise werden UV- härtende Klebestoffe nach der Fügung der Klebepartner bestrahlt. Dazu bedarf es Substraten, die ausreichend durchlässig sind für die verwendete UV-Strahlung. Die Klebestelle wird dann so lange bestrahlt, bis die Aushärtung ausreichend fortgeschritten ist.

"Offene Zeit" bzw. "Offenzeit" ist die Zeit zwischen Klebstoffauftrag und Verklebung. Bei UV- aktivierbaren Klebstoffen wird unter der Offenzeit die Zeit zwischen UV-Aktivierung und Verklebung verstanden, d.h. die Zeit nach der Aktivierung, während der ein Verbund hergestellt werden kann. In der Offenzeit wird beispielsweise eine Kartuschenabdeckvorrichtung auf eine zu versiegelnde Kartusche aufgebracht. Die in der Kartuschenabdeckvorrichtung enthaltene Klebmasse sorgt für die nötige Haftung (Adhäsion). Da sich die Viskosität, d.h. die Zähflüssigkeit einer Klebmasse nach dem Auftrag in der Regel erhöht, ist die Offenzeit bei Klebmassen zeitlich begrenzt.

Die "Aushärtezeit" ist der Zeitraum zwischen der Fügung der Fügepartner und dem Erreichen der Endfestigkeit des Verbundes.

Mit "Dunkelreaktion" wird in der Folge die Tatsache bezeichnet, dass eine Härtungsreaktion durch kurzzeitige Bestrahlung der Klebmasse mit UV-Licht angestoßen (angetriggert) wird und dann die komplette Aushärtung ohne weitere Bestrahlung erfolgt.

Unter "Deckschicht" wird eine auf einer Klebmasse angeordnete Schicht bezeichnet, die die Kartusche permanent abdeckt. Die Deckschicht kann zum Schutz der Kartuschenabdeckvorrichtung permanent auf dieser verbleiben. Alternativ kann die Deckschicht in Form einer Abziehfolie bereitgestellt sein, die vor der Anwendung, das heißt vor dem Fügen mit einer Kartusche, entfernt wird.

### Stand der Technik

Für die In-Vitro-Diagnostik oder zur diagnostischen Verlaufskontrolle einer Vielzahl von Krankheiten werden mikrofluidische Systeme in Form von polymeren Testträgern eingesetzt. Die Testträger beinhalten in der Regel ein mikrofluidisches System, mit dessen Hilfe ein biologischer Assay automatisiert prozessiert werden kann.

Die Herstellung eines Testträgers erfordert die Bereitstellung einer Kartusche, welche beispielsweise mittels eines Mikrothermoform- oder Spritzgussverfahrens hergestellt wird. Die Kartusche wird dann mit den für die gewünschte Funktion notwendigen Reagenzien (fest und flüssig) bestückt. Abschließend wird die Kartusche mit einer Siegelfolie verschlossen.

Zu den gängigen Techniken zum Verschließen einer Kartusche zählen Kaltsiegeln, Thermodiffusionssiegeln, Laserschweißen, und Lösungsmittelsiegeln. Beim Kaltsiegeln (Adhäsives) wird eine auf Acrylat basierende Folie auf die Kartusche aufgelegt, wobei durch Ausübung von Druck Mikrokapseln zerstört werden und so eine Haftung nur an den gewünschten Stellen entsteht. Das adhäsive Kleben ist einfach umzusetzen, kann aber zu einem Verstopfen von mikrofluidischen Kanälen der Kartusche führen und weist eine relativ geringe Siegelnahtfähig- und -festigkeit auf, insbesondere bei höheren Temperaturen.

Das Thermodiffusionssiegeln zeichnet sich durch hohe Siegelnahtfestigkeiten aus. Das Verfahren birgt jedoch bei thermosensiblen Reagenzien die Gefahr eines negativen Einflusses durch die Siegeltemperatur. Darüber hinaus ist die Verfügbarkeit von geeigneten, kommerziell verfügbaren Siegelfolien begrenzt.

Laserschweißen ist prozesstechnisch leicht umzusetzen, ist bei transparent/transparent-Materialien technisch aber noch nicht ausgereift, und geht mit hohen Anschaffungskosten einher.

Mittels des Lösungsmittelsiegelns können hohe Siegelnahtfestigkeiten erzielt werden. Aufgrund der eingesetzten Lösungsmittel (meist toxisch) ist das Lösungsmittelsiegeln schwer zu handhaben, erfordert einen gesicherten Arbeitsplatz (Abzug) und kann zu einer negativen Beeinflussung der biochemischen Reagenzien führen.

WO 2017/117163 A1 zeigt einen zweistufigen strukturellen Haftklebstoff.

US 2015/0184034 A1 zeigt eine Klebstoffschicht und eine Klebefolie.

Aus der WO 2017/174303 A1 ist ein haftklebriges Klebeband bekannt, welches eine strahlungsaktivierbare, polymerisierbare Zusammensetzung enthält, die nach der Aktivierung eine Dunkelreaktion durchläuft.

Aus der US 2003/0081090 A1 ist eine Abdeckung für Druckkartuschen bekannt, welche mittels eines Klebstoffs auf der Druckkartusche appliziert wird.

Aus der WO 2018/153985 A1 ist ein klebender Film bekannt, welcher eine durch UV-Strahlung aktivierbare Klebmasse aufweist, welche nach der UV-Aktivierung eine Offenzeit von 10 Sekunden bis 60 Minuten aufweist, während der der Film eine haftklebende Eigenschaft aufweist.

D. Kosse, et al. "Microthermoforming and Sealing of COP Films to Form Thin Walled Labon-achip Cartridges", Proceedings of the 8th International Converence on Multi-Material Micro Manufacture, 2011, 187-190 offenbart ein Verfahren zum klebenden Verschließen von mikrofluidischen Kartuschen, wobei ein Klebstoff auf Basis von COC's verwendet wird.

### Darstellung der Erfindung

Ausgehend von dem bekannten Stand der Technik ist es eine Aufgabe der vorliegenden Erfindung, eine verbesserte Vorrichtung zum Verschließen einer mikrofluidischen Kartusche sowie ein entsprechendes Verfahren bereitzustellen.

Diese Aufgabe wird durch ein System mit einer mikrofluidischen Kartusche und einer Kartuschenabdeckvorrichtung zum Versiegeln der mikrofluidischen Kartusche mit den Merkmalen des Anspruchs 1 und einem Verfahren zur Herstellung des Systems mit den Merkmalen des Anspruchs 10 gelöst. Vorteilhafte Weiterbildungen ergeben sich aus den Unteransprüchen.

Ein erster Aspekt der Erfindung betrifft ein System mit einer mikrofluidischen Kartusche und einer Kartuschenabdeckvorrichtung zum Versiegeln der mikrofluidischen Kartusche, wobei die Kartuschenabdeckvorrichtung mindestens eine schichtförmige Klebmasse umfasst. Erfindungsgemäß ist die schichtförmige Klebmasse zum Einleiten der Aushärtung UV-aktivierbar und nach Aktivierung bis zum Ablauf einer Offenzeit bei Raumtemperatur haftklebrig. Alternativ kann die schichtförmige Klebmasse auch vor der UV-Aktivierung haftklebrig sein.

Dadurch, dass die schichtförmige Klebmasse, vor Ablauf der Offenzeit im nicht aktivierten Zustand haftklebend ist, kann die Kartuschenabdeckung bei der Verarbeitung wie ein "normales" Haftklebeband behandelt werden, d.h. es kann leicht haftend appliziert und vor dem Ende der Offenzeit gegebenenfalls auch wieder abgelöst oder sogar repositioniert werden. Erst nach Ablauf der Offenzeit sind die Fügepartner endgültig und strukturell gefügt.

Die Kartuschenabdeckvorrichtung zum Versiegeln einer mikrofluidischen Kartusche umfasst mindestens eine schichtförmige Klebmasse, welche umfasst:
2 - 40 Gew.-% Filmbildner,
10 - 70 Gew.-% aromatische Epoxidharze,
cycloaliphatische Epoxidharze, wobei die cycloaliphatischen Epoxidharze 35 Gew.-% nicht überschreiten,
0,5 - 7 Gew.-% kationische Initiatoren,
0 - 50 Gew.-% epoxidierte Polyetherverbindungen, und
0 - 20 Gew.-% Polyol,
wobei sich die Anteile zu 100% addieren. Überraschenderweise wurde gefunden, dass durch die Zusammensetzung der schichtförmigen Klebmasse, deren Aushärtung durch UV Aktivierung angestoßen wird, diese schichtförmige Klebemasse während der Offenzeit haftklebrig ist und nach Ende der Offenzeit schließlich zu einer strukturellen Verbundfestigkeit führt.

Ein vorteilhafter Bestandteil der schichtförmigen Klebmasse ist ein Filmbildner. Beim Filmbildner kann es sich um thermoplastische oder elastomere Polymerverbindungen handeln, die die Viskosität regeln. Als Filmbildner kommen z.B. folgende Polymere in Frage: Acrylate, Polyamide, Phenoxyharze, Polyurethane oder Ethylenvinylacetate (EVAs), wobei bevorzugt Polyurethane und Ethylenvinylacetatcopolymere verwendet werden. Als Epoxidharze können aromatische, aliphatische und cycloaliphatische Epoxidharze eingesetzt werden. Sie können in ihrer Viskosität flüssig, hochviskos oder fest sein. Bevorzugt ist der Anteil der aromatischen Harze gemessen am Anteil des Epoxidäquivalents der Mischung höher als der Anteil der cycloaliphatischen Epoxidharze. In einer Weiterentwicklung liegt der Anteil des Epoxidäquivalents der cycloaliphatischen Epoxidharze am Epoxidäquivalent aller Epoxidharze zwischen 0 % und 35 %.

In einer Weiterentwicklung liegt der Anteil des Epoxidäquivalents der aromatischen Epoxidharze am Epoxidäquivalent aller Epoxidharze über 60 %.

Bei solchen Rezepturen sind grundsätzlich Offenzeiten bis 60 Minuten möglich.

Vorteilhafterweise enthält die schichtförmige Klebmasse demnach zumindest eine Polyetherverbindung, die mit Epoxidgruppen derivatisiert ist. Es handelt sich dabei besonders bevorzugt um epoxidierte Polyethylenglykole oder Polypropylenglykole. In einer Weiterentwicklung beträgt der Anteil des Epoxidäquivalents der epoxidierten Polyetherverbindungen am Epoxidäquivalent aller Epoxidharze zwischen 0 und 40%. Über den Anteil der Polyetherverbindungen kann wirksam die Offenzeit eingestellt werden.

Eine weitere Komponente der schichtförmigen Klebmasse können Verbindungen mit mehreren freien Hydroxygruppen (Polyole), beispielsweise Polyethylenglykole, Polytetrahydrofuran oder Polypropylenglykole sein. Laut Literatur ist der Zusatz von Polyolen für eine Verzögerung der Aushärtereaktion verantwortlich (A. Hartwig, "Kationisch härtende Epoxidharzklebstoffe", Februar 2012). Durch Übertragungsreaktionen verlängere sich die Aushärtungsreaktion, so dass eine Dunkelreaktion resultiere. Zusammen mit den epoxidierten Polyethern sind demnach die Polyole für die Steuerung der Offenzeit und der Geschwindigkeit der Vernetzungsreaktion nützlich.

Als Initiatoren für die schichtförmige Klebmasse können kationische Photoinitiatoren eingesetzt werden. Es eignen sich beispielsweise Arylsulfonium, lodonium, Ferrocenium oder Thioxatheniumsalze, besonders bevorzugt sind Triarylsulfoniumsalze. Diese zeichnen sich durch eine schnelle Zerfallsreaktion schon bei relativ geringer UV-Bestrahlung aus. Beim Zerfall der Initiatoren bilden sich Säuren, die die Epoxidharze aushärten.

Als weitere Komponenten für die schichtförmige Klebmasse kommen die dem Fachmann unter anderem bekannten Zusatzstoffe für Epoxidklebebänder in Frage: Schlagzähmodifikatoren, organische oder anorganische Füllstoffe, auch funktionelle Füllstoffe wie zum Beispiel Flammschutzmittel, Farbstoffe, Alterungsschutzmittel, Verlaufs- und Rheologiehilfsmittel.

In einer bevorzugten Weiterbildung hat die schichtförmige Klebmasse nach der UV-Aktivierung eine Offenzeit von 0 Sekunden bis 60 Minuten, bevorzugt von 0 Sekunden bis 30 Minuten und besonders bevorzugt von 10 Sekunden bis 60 Minuten, während der Film eine haftklebende Eigenschaft aufweist.

Vorzugsweise härtet die schichtförmige Klebmasse nach der UV-Aktivierung ohne Einbringung von Wärme oder UV-Licht aus. In einer weiteren Ausgestaltung bildet die schichtförmige Klebmasse während des Aushärtens einen Duromerfilm aus.

In einer weiteren Ausführungsform haftet die schichtförmige Klebmasse nach der Aushärtung nur an den Oberflächen der mikrofluidischen Kartusche, welche aus Substraten wie zum Beispiel COP, PC oder ABS bestehen. Vorteilhafterweise ist die schichtförmige Klebmasse an den Stellen der Kanäle nicht mehr klebend.

In einer Weiterbildung ist durch ein reaktives Epoxidharzsystem eine geringe Klebstoffschichtdicke ausreichend, um eine sehr hohe Siegelkraft zu erreichen. Dies kann den Vorteil haben, dass die Kanäle der Kartusche nicht durch die Klebmasse verschlossen werden: Je geringer die Klebstoffdicke, desto geringer die Gefahr, dass die Kanäle durch die Klebmasse verschlossen werden. In einer weiteren Ausgestaltung weist die schichtförmige Klebmasse eine Dicke von 2 bis 1.000 µm auf, alternativ eine Dicke von 5 bis 500 µm, eine Dicke von 5 bis 200 µm oder eine Dicke von 5 bis 100 µm. Es ist vorteilhaft, wenn die Dicke so gewählt wird, dass eine ausreichende Haftkraft gegeben ist und gleichzeitig ein Verstopfen der Kanäle durch die schichtförmige Klebmasse vermieden wird. Geringere Dicken der schichtförmige Klebmasse haben unter anderem den Vorteil, dass weniger Klebmasse verwenden werden muss.

In einer weiteren Ausführungsform umfasst die schichtförmige Klebmasse Füllkörper. Die Füllkörper können unter anderem keramische Füllkörper oder alternativ Füllkörper auf Polymerbasis sein. Zum Beispiel können die Füllkörper Vollglaskugeln, Hohlglaskugeln und/oder Polymerkugeln sein. Vorteilhafterweise ist die maximale Abmessung eines Füllkörpers, alternativ der Durchmesser eines Füllkörpers, oder alternativ der kleinste Durchmesser eines Füllkörpers kleiner als die Dicke der schichtförmigen Klebmasse. Die Füllkörper können sich unter anderem vorteilhaft auf die elastischen Eigenschaften der schichtförmigen Klebmasse oder auf die elastischen Eigenschaften der Kartuschenabdeckvorrichtung auswirken, was wiederum zu einer Vorteilhaften Versiegelung der mikrofluidischen Kartusche führen kann. Die Zugabe von Füllkörpern kann auch dazu führen, dass die schichtförmige Klebmasse oder alternativ die gesamte Kartuschenabdeckvorrichtung vergleichsweise ökonomischer hergestellt werden kann.

In einer weiteren Ausführungsform ist auf einer ersten Seite der schichtförmigen Klebmasse eine Deckschicht, bevorzugt eine Kunststofffolie, welche als Abdeckfolie fungiert, angeordnet. Die Deckschicht kann zum Beispiel auch die Funktion eines Trägermaterials übernehmen. Zusätzlich kann die Deckschicht die Stabilität der Kartuschenabdeckvorrichtung erhöhen, insbesondere, wenn die Deckschicht während der Benutzung der mikrofluidischen Kartusche in der Vorrichtung verbleibt. Zusätzlich kann die Deckschicht die schichtförmigen Klebmasse schützen, zum Beispiel vor äußeren Einflüssen, wie chemischen, physikalischen, oder mechanischen Einflüssen. Die Deckschicht kann auch insoweit vorteilhaft sein, als dass sie ein Aufrollen der Kartuschenabdeckvorrichtung erlaubt, ohne dass sich die schichtförmigen Klebmasse mit sich selbst unvorteilhaft verklebt. Darüber hinaus kann die Deckschicht ein Übereinanderlegen mehrerer separater Kartuschenabdeckvorrichtungen erlauben, ohne dass sich die schichtförmigen Klebmassen gegenseitig miteinander unvorteilhaft verkleben.

In einer bevorzugten Weiterbildung ist die Deckschicht abziehbar. Zum Beispiel kann die Deckschicht eine Abziehfolie oder ein Release Liner sein. Dadurch kann die Deckschicht nach Zusammenführung der Kartuschenabdeckvorrichtung mit der mikrofluidischen Kartusche oder nach dem Aushärten der schichtförmigen Klebmasse wieder entfernt werden. Dies ist beispielsweise dann vorteilhaft, wenn hohe Qualitätsansprüche an die optischen Eigenschaften der Kartuschenabdeckvorrichtung bestehen.

Die Aushärtung der schichtförmigen Klebmasse wird durch die UV-Aktivierung angestoßen. Während der Aushärtung wird ein Duromerfilm ausgebildet. Vorzugsweise hat die ausgehärtete schichtförmige Klebmasse die benötigte Stabilität, und/oder die benötigte Widerstandsfähigkeit gegen äußere Einflüsse, insbesondere chemische, physikalische, oder mechanische Einflüsse.

In einer vorteilhaften Weiterbildung hat die schichtförmigen Klebmasse eine Dicke von > 5 µm, > 100 µm, > 500 µm oder > 1000 µm.

In einer weiteren Ausgestaltung ist auf einer zweiten Seite der schichtförmigen Klebmasse eine Deckschicht, welche bevorzugt als Abziehfolie fungieren kann, angeordnet. Auch diese Deckschicht kann als Trägermaterial dienen. Zusätzlich schützt die Deckschicht die schichtförmigen Klebmasse vor äußeren Einflüssen, zum Beispiel chemischen, physikalischen, und/oder mechanischen Einflüssen. Auch diese Deckschicht kann insoweit vorteilhaft sein, weil sie ein Aufrollen der Kartuschenabdeckvorrichtung erlaubt, ohne dass sich die schichtförmige Klebmasse mit sich selbst unvorteilhaft verklebt oder weil sie ein Übereinanderlegen mehrerer separater Kartuschenabdeckvorrichtungen erlaubt, ohne dass sich die schichtförmigen Klebmassen gegenseitig unvorteilhaft miteinander verkleben.

Die Deckschicht kann abziehbar ausgestaltet sein. Zum Beispiel kann die Deckschicht eine Abziehfolie oder ein Release Liner sein. Die Deckschicht kann dann vor dem Zusammenführen der Kartuschenabdeckvorrichtung mit der mikrofluidischen Kartusche entfernt werden.

In einer Weiterentwicklung weist die Deckschicht auf der der schichtförmigen Klebmasse zugewandten Seite und/oder der der schichtförmigen Klebmasse abgewandten Seite eine klebstoffabweisende Beschichtung auf. Die klebstoffabweisende Beschichtung auf der der schichtförmigen Klebmasse zugewandten Seite kann insbesondere vorteilhaft sein, wenn die Deckschicht abziehbar sein soll. Die klebstoffabweisende Beschichtung auf der der schichtförmigen Klebmasse abgewandten Seite kann vorteilhaft sein, wenn die Kartuschenabdeckvorrichtung aufrollbar sein soll.

In einer Weiterentwicklung ist die klebstoffabweisende Beschichtung ein Silikonsystem, insbesondere eine Silikonschicht, mit welcher die Deckschicht beschichtet ist. Vorteilhafterweise ist die klebstoffabweisende Beschichtung so gewählt, dass sie eine ausreichende Dehäsion zur schichtförmigen Klebmasse aufweist.

In einer Weiterentwicklung ist die Deckschicht auf der ersten Seite der schichtförmigen Klebmasse und/oder die Deckschicht auf der zweiten Seite der schichtförmigen Klebmasse eine temperatur- und medienbeständige Folie, bevorzugt eine PET-Folie, eine PC-Folie, eine COP-Folie oder dergleichen. Die temperaturbeständigen Folien halten bevorzugt Temperaturen größer 80°C, besonders bevorzugt von 90°C bis 125°C stand. Die Medienbeständigkeit der Folien kann beispielsweise nach der DIBt-Prüfliste eingestuft werden.

In einer Weiterentwicklung weist die Kartuschenabdeckvorrichtung eine Autofluoreszenz im Bereich von 230 bis 450 nm auf. Autofluoreszenz im Bereich von 300-450 nm kann mit einer Kartuschenabdeckvorrichtung erzielt werden, die neben einer schichtförmigen Klebmasse mindestens eine Deckschicht, wie zum Beispiel eine Trägerfolie, aufweist.

In einer Weiterentwicklung weist die schichtförmige Klebmasse der Kartuschenabdeckvorrichtung eine wesentliche Autofluoreszenz nur im Bereich von 300 bis 450 nm auf. Diese Eigenschaft ist besonders vorteilhaft für die In-Vitro-Diagnostik, welche häufig mittels mikrofluidischen Kartuschen durchgeführt wird. Hier erfolgt die Detektion der Ergebnisse häufig mittels Fluoreszenzspektroskopie. Deswegen ist es vorteilhaft wenn die Kartuschenabdeckvorrichtung keine wesentliche Autofluoreszenz in dem Bereich typischer Anregungs-/und Detektionswellenlängen von gängigen Fluoreszenzfarbstoffen aufweist. Dieser Bereich erstreckt sich in etwa von 460 bis 720 nm.

In einer weiteren Ausgestaltung ist die Kartuschenabdeckvorrichtung besonders dazu geeignet, an Oberflächen aus Kunststoffen wie COP und PET zu haften, wenn deren Oberflächen vorher mit Plasma energetisch erhöht wurden.

In einer weiteren Ausführungsform ist die Kartuschenabdeckvorrichtung insbesondere geeignet, an Oberflächen aus Metall, Glas, Keramik, Glasfaserkunststoff (GFK), Kohlenstofffaserverstärkter Kunststoff (CFK) und/ oder anderen höher energetischen Oberflächen zu haften.

In einer Weiterbildung weist die Kartuschenabdeckvorrichtung in Abhängigkeit von Formulierungsdetails, Strahlendosis und zu verklebenden Substraten bei der Verklebung Festigkeiten zwischen 6 und 20 MPa auf.

In einer Weiterentwicklung ist die Kartuschenabdeckvorrichtung zur (semi-) strukturellen Verklebung von Kunststoffen und weiteren niederenergetischen Oberflächen geeignet.

Ein zweiter Aspekt der Erfindung betrifft ein Verfahren zur Herstellung einer Kartuschenabdeckvorrichtung gemäß dem ersten Aspekt der Erfindung. Das Verfahren umfasst die folgenden Schritte:
Auftragen der bei Raumtemperatur haftklebrigen Klebmasse auf ein Trägermaterial. Die Klebemasse kann zum Beispiel mittels einer Rakel auf ein Trägermaterial aufgetragen werden. Das Trägermaterial kann zum Beispiel eine Polyesterfolie sein. Vorteilhafterweise weist die Polyesterfolie eine Dicke von 10- 200 µm auf. Das Trägermaterial kann auch eine temperatur- und medienbeständige Folie sein, alternativ eine PET-Folie, eine PC-Folie, eine COP-Folie oder dergleichen. In einer Weiterentwicklung kann die Klebemasse auch lösemittelhaltig sein. Das Trägermaterial kann auch vorteilhafterweise auf einer oder auf beiden Seiten eine klebstoffabweisende Beschichtung, vorteilhafterweise eine Silikonschicht aufweisen.

Trocknen des Verbundes. Beispielsweise kann der Verbund zunächst 10 Minuten bei Raumtemperatur und anschließend 10 Minuten bei 80°C im Umluftofen getrocknet werden. Die Auftragsmenge kann so eingestellt werden, dass nach dem Trocknen eine vorher festgelegte Schichtdicke resultiert. Das Trocknen kann einem Entfernen des Lösemittelgemisches entsprechen. Nach dem Trocknen kann man eine haftklebrige, alternativ klebrige schichtförmige Klebmasse erhalten.

In einer Ausführungsform haftet diese Klebmasse schon einseitig auf dem im Produkt verbleibenden Trägermaterial. In einer anderen Ausführungsform kann die Klebmasse auch erst auf ein klebstoffabweisendes Trägermaterial, zum Beispiel eine silikonisierte Folie beschichtet werden und nach der Trocknung auf die im Produkt verbleibende Deckschicht kaschiert werden.

In einer Weiterentwicklung kann dem Verbund noch eine zweite Deckschicht zugefügt werden, welche vorteilhafterweise den Verbund schützt.

In einer Weiterentwicklung sind für die Handhabung der Rohstoffe, des Klebstoffs und für die Beschichtung keine Schutzmaßnahmen gegen UV-Licht notwendig. Es ist ausreichend in normaler Laborumgebung entfernt von einer UV-Lampe zu arbeiten. Eine weitere Abschirmung ist hier nicht nötig.

In einer Weiterentwicklung können aus dem Verbund Stanzteile gefertigt werden.

Ein dritter Aspekt der Erfindung betrifft ein Verfahren zur Herstellung eines Systems gemäß dem ersten Aspekt der Erfindung. Dieses Verfahren umfasst die folgenden Schritte:
UV-Aktivierung der Kartuschenabdeckvorrichtung. Die Härtung der Klebebänder und Stanzteile wird durch UV-Licht aktiviert, bevorzugt durch UVA- oder UVC-Licht. Beispielsweise kann hierfür eine UV-LED Lampe mit einer Wellenlänge von 365 nm verwendet werden. Normalerweise werden die hier eingesetzten Folien mittels UV Licht vor dem Einsatz sterilisiert. Dieser Schritt kann mit der Aktivierung zusammengelegt werden, um eine weitere Prozesseffizienz zu generieren.

Versiegeln der mikrofluidischen Kartusche durch Zusammenfügen einer zweiten Seite der Kartuschenabdeckvorrichtung mit der mikrofluidischen Kartusche innerhalb der Offenzeit, beziehungsweise vor dem Ablauf der Offenzeit der schichtförmigen Klebmasse. Falls auf dieser Seite der Klebmasse eine weitere Deckschicht, zum Beispiel eine Abziehfolie vorhanden ist, sollte diese vor dem Zusammenfügen abgenommen werden. Das Zusammenfügen kann zum Beispiel ausgeführt werden, indem die Kartuschenabdeckvorrichtung auf die mikrofluidische Kartusche gelegt wird. Vorteilhaft ist hierbei ein Anpressen mit leichtem Druck. Durch eine Deckschicht der Kartuschenabdeckvorrichtung auf der der Kartusche abgewandten Seite kann vermieden werden, dass Teile der Klebmasse am Andruckmittel, zum Beispiel einem Pressstempel hängen bleiben.

Gegebenenfalls kann die auf einer ersten Seite der Klebmasse angeordnete Deckschicht nach dem Anpressen entfernt werden. Alternativ kann die Deckschicht auch nach der Aushärtung entfernt werden. Dadurch bestehen keine Anforderungen, oder geringere Anforderungen an die optischen Eigenschaften, wie zum Beispiel die Autofluoreszenz oder Transparenz der Deckschicht.

Aushärten der Kartuschenabdeckvorrichtung auf der mikrofluidischen Kartusche. Nach der UV Aktivierung ist noch eine gewisse Zeitspanne vorhanden, während der die Fügeteile endgültig ausgerichtet und gefügt werden können. In einer Weiterentwicklung ist eine weitere Aktivierung nach dem Anstoßen der Härtung durch UV-Licht nicht mehr notwendig.

Durch die sofortige Haftkraft des Klebebandes auf der Kartusche, kann die versiegelte Kartusche umgehend weitertransportiert werden. Während der Lagerung kann der Epoxidharzklebstoff, ohne weiteres Zutun, vollkommen aushärten. Die Härtungsreaktion läuft in mehreren Schritten ab. Die Dauer des Ablaufs der Dunkelreaktion kann von verschiedenen Faktoren wie zum Beispiel der eingesetzten Harzkomponente (cycloaliphatisches oder aromatisches Epoxidharz), der Kettenlänge, dem Initiatortyp, der Bestrahlungszeit, der Betrahlungsdosis (UV-Wellenlänge) oder auch der Temperatur abhängen.

Die Aushärtezeit nach der Bestrahlung kann in Abhängigkeit von den genannten Faktoren und deren Zusammenspiel zwischen 0 Sekunden und 60 Minuten betragen.

In einer Weiterbildung ist nach höchstens 2 Stunden die schichtförmige Klebmasse weitestgehend ausreagiert, so dass der Klebstoff in den Kanälen nicht mehr klebt. Duromere sind für ihre hohen Resistenzen gegenüber Temperaturen und Chemikalien bekannt. Bei auf Monomere sensitiv reagierenden Essays kann eine nachträgliche Lagerung (z.B. 1 Stunde bei ca. 60°C) helfen, die letzten Monomere abzureagieren.

In einer weiteren Ausführungsform härtet die schichtförmige Klebmasse ohne Einbringung von Wärme aus.

In einer weiteren Ausgestaltung härtet die schichtförmige Klebmasse unter der Einbringung von Wärme aus.

Die schichtförmige Klebmasse kann eine sehr hohe Siegelkraft, vergleichbar mit der von Heißsiegelfolien aufweisen, kann jedoch bei Raumtemperatur aushärten und kann somit auch für temperatursensible Reagenzien eingesetzt werden. Vorteilhafterweise benötigt das Verfahren keine Heißsiegelstation. Alternativ kann diese benutzt werden, da durch eine gering erhöhte Temperatur von beispielsweise ca. 35-45°C die Benetzung der schichtförmigen Klebmasse auf der Oberfläche der mikrofluidischen Kartusche erhöht werden kann.

In einer weiteren Ausführungsform härtet die schichtförmige Klebmasse ohne zusätzliche Einbringung von UV-Licht aus.

In einer weiter bevorzugten Weiterbildung erfolgt die UV-Aktivierung räumlich getrennt von der mikrofluidischen Kartusche, alternativ erfolgt die UV-Aktivierung auf der mikrofluidischen Kartusche, das heißt während oder nach dem Fügen der Kartuschenabdeckvorrichtung mit der Kartusche.

In einer weiteren Ausführung erfolgt die UV-Aktivierung vor dem Fügen der Kartuschenabdeckvorrichtung auf die mikrofluidische Kartusche, alternativ auch während oder nach dem Fügen der Kartuschenabdeckvorrichtung auf die mikrofluidische Kartusche.

Dadurch, dass die Klebmasse bis zu einer gewissen Zeit auch noch nach der UV-Aktivierung während der Offenzeit haftklebrig sein kann, kann die UV-Aktivierung auch schon vor dem Zusammenfügen der Kartuschenabdeckvorrichtung mit der mikrofluidischen Kartusche erfolgen. Das erlaubt auch eine UV-Aktivierung der schichtförmigen Klebmasse räumlich getrennt von der mikrofluidischen Kartusche, zum Beispiel außerhalb einer Siegelstation mit der bereitgestellten mikrofluidi- sehen Kartusche. Dies ermöglicht, dass die UV-Bestrahlung keinen Einfluss auf die Funktionalität der mikrofluidischen Kartusche oder auf die Funktionalität der eingesetzten Reagenzien hat. In einer bevorzugten Weiterentwicklung wird durch die räumlich getrennte UV-Aktivierung die Kartuschenabdeckvorrichtung sterilisiert.

Eine UV-Aktivierung der schichtförmigen Klebmasse nach dem Zusammenfügen kann wiederum vorteilhaft sein, um die Prozesseffizienz zu verbessern. Beispielsweise kann durch die UV-Aktivierung auch die mikrofluidische Kartusche sterilisiert werden, was einen separaten Sterilisierungsschritt ersparen kann.

### Kurze Beschreibung der Figuren

Bevorzugte weitere Ausführungsformen der Erfindung werden durch die nachfolgende Beschreibung der Figuren näher erläutert. Dabei zeigen:
Figur 1 schematisch eine Kartuschenabdeckvorrichtung 10, welche eine erste Deckschicht 50 umfasst;
Figur 2 schematisch die Kartuschenabdeckvorrichtung 10 aus Figur 1, welche eine zusätzliche zweite Deckschicht 51 umfasst;
Figur 3 schematisch eine Kartuschenabdeckvorrichtung 10, welche eine Abziehfolie umfasst;
Figur 4 schematisch eine Kartuschenabdeckvorrichtung 10, welche auf beiden Seiten eine Abziehfolie umfasst;
Figur 5 schematisch eine Kartuschenabdeckvorrichtung 10, welche eine mikrofluidische Kartusche 20 versiegelt; und
Figur 6 schematisch eine schichtförmige Klebmasse 30, welche Füllkörper 40 umfasst.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen versehen, und auf eine wiederholte Beschreibung dieser Elemente wird teilweise verzichtet, um Redundanzen zu vermeiden.

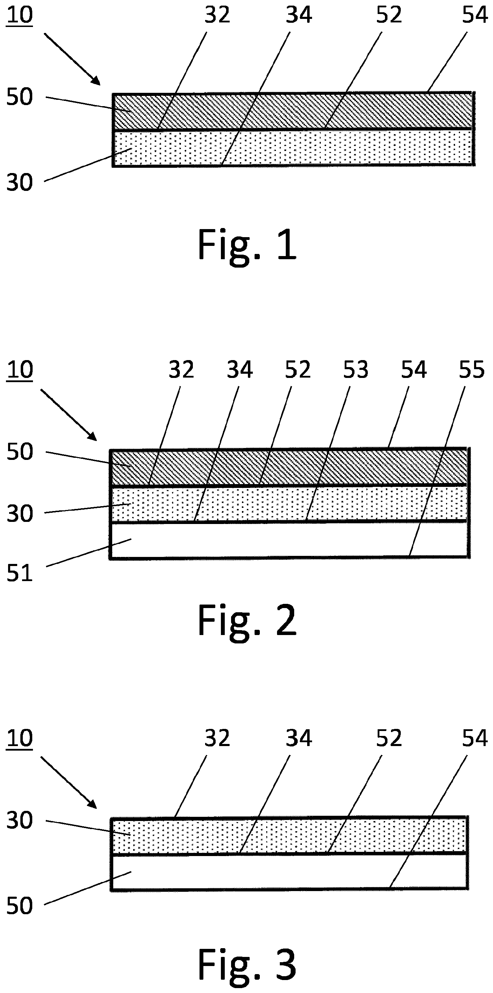

In Figur 1 ist schematisch eine Ausführungsform der Kartuschenabdeckvorrichtung 10 gezeigt, welche eine schichtförmige Klebmasse 30 umfasst. Die Zusammensetzung der schichtförmige Klebmasse 30 ist durch die nachstehenden Bereiche festgelegt:
i. 2 - 40 Gew.-% Filmbildner,
ii. 10 - 70 Gew.-% aromatische Epoxidharze,
iii. cycloaliphatische Epoxidharze, wobei die cycloaliphatischen Epoxidharze 35 Gew.- % nicht überschreiten,
iv. 0,5 - 7 Gew.-% kationische Initiatoren,
v. 0 - 50 Gew.-% epoxidierter Polyetherverbindungen, und
vi. 0 - 20 Gew.-% Polyol,
wobei sich die Anteile zu 100% addieren.

In der vorliegenden Ausführungsform umfasst die schichtförmige Klebmasse 30:
i. 11 Gew.-% Filmbildner,
ii. 58 Gew.-% aromatische Epoxidharze,
iii. 10 Gew.-% cycloaliphatische Epoxidharze
iv. 2 Gew.-% kationische Initiatoren,
v. 12 Gew.-% epoxidierter Polyetherverbindungen, und
vi. 7 Gew.-% Polyol

Nachfolgend sind beispielhaft konkrete Produktnamen der einzelnen Bestandteile der schichtförmigen Klebmasse 30 angegeben:
i. 11 Gew.-% Filmbildner, insbesondere Desmomelt 530,
ii. 58 Gew.-% aromatische Epoxidharze, insbesondere 38 % Araldite GT 7072 und 20 % D.E.R. 331,
iii. 10 Gew.-% cycloaliphatische Epoxidharze, insbesondere Uvacure 1534,
iv. 2 Gew.-% kationische Initiatoren, insbesondere Chivacure 1176,
v. 12 Gew.-% epoxidierter Polyetherverbindungen, insbesondere D.E.R. 736 P, und
vi. 7 Gew.-% Polyol, insbesondere PEG 400.

In der in Figur 1 gezeigten Kartuschenabdeckvorrichtung beträgt die Dicke der schichtförmigen Klebmasse 30 - 70 µm. Alternativ kann die Dicke 2 bis 1000 µm, bevorzugt 5 bis 500 µm und besonders bevorzugt 5 bis 100 µm betragen. Es sind schematisch auch die erste Seite der schichtförmigen Klebmasse 32 und die zweite Seite der schichtförmigen Klebmasse 34 gezeigt.

Auf der ersten Seite 32 der schichtförmigen Klebmasse 30 ist eine Deckschicht 50 in Form eines Polyesterfolienträgers angeordnet. Als Deckschicht kann jedoch auch eine beliebige andere Deckschicht, bevorzugt eine Kunststofffolie verwendet werden. Vorteilhafterweise kann die Deckschicht 50 auch eine temperatur- und medienbeständige Folie, bevorzugt eine PET-Folie, eine PC-Folie, eine COP-Folie oder dergleichen sein.

Die Deckschicht 50 in dieser Ausführungsform hat eine Dicke von 100 µm, sie kann aber auch eine andere Dicke haben, insbesondere eine Dicke von 10 - 200 µm. Die Deckschicht 50 in dieser Ausführungsform weist auf der der schichtförmigen Klebmasse 30 abgewandten Seite 54 eine Silikonbeschichtung auf. Alternativ könnte aber auch eine beliebige andere klebstoffabweisende Beschichtung, insbesondere ein Silikonsystem bereitgestellt sein.

Die klebstoffabweisende Beschichtung ist vorteilhafterweise so gewählt, dass sie eine genügend hohe Dehäsion zum Epoxidharzsystem aufweist. Dies ist insofern vorteilhaft, als dadurch die Kartuschenabdeckvorrichtung 10 beispielsweise zur Lagerung in sich gewickelt werden kann.

Die Deckschicht 50 ist vorzugsweise so gewählt, dass die Autofluoreszenz nicht in dem Wellenlängenbereich liegt, der von gängigen Fluoreszenzfarbstoffen verwendet wird. In dieser Ausführungsform ist dies nicht der Fall, da die Autofluoreszenz von Klebmasse und Deckschicht im Bereich von 230 - 450 nm liegt.

Der Polyesterfolienträger 50 in dieser Ausführungsform weist auf der der schichtförmigen Klebmasse 30 zugewandten Seite 52 keine weitere Beschichtung auf. Dies ist in dieser Ausführungsform vorteilhaft, da die Deckschicht 50 auf der schichtförmigen Klebmasse 30 verbleiben soll. Die Deckschicht 50 kann dadurch beispielsweise als einseitige Schutzfolie für die schichtförmige Klebmasse 30 der Kartuschenabdeckvorrichtung 10 dienen.

Die schichtförmige Klebmasse 30 ist zum Einleiten der Aushärtung UV-aktivierbar und vor und nach Aktivierung bis zum Ablauf einer Offenzeit bei Raumtemperatur haftklebrig.

In Figur 2 ist schematisch eine Kartuschenabdeckvorrichtung 10 gezeigt, welche im Wesentlichen mit der in Figur 1 gezeigten Kartuschenabdeckvorrichtung 10 übereinstimmt. Die in Figur 2 gezeigte Kartuschenabdeckvorrichtung 10 unterscheidet sich durch die nachstehenden Merkmale von der in Figur 1 gezeigten Kartuschenabdeckvorrichtung.

Bei dieser Ausführungsform ist auf der zweiten Seite 34 der schichtförmigen Klebmasse 30 eine zusätzliche Deckschicht 51 in Form einer PET-Folie angeordnet. Alternativ kann auch eine andere beliebige Deckschicht angeordnet sein, vorzugsweise in Form einer Abziehfolie. Die Deckschicht 51 in dieser Ausführungsform hat eine Dicke von 50 µm, sie kann aber auch eine andere Dicke haben, insbesondere eine Dicke von 2 bis 1000 µm, bevorzugt von 5 bis 500 µm und besonders bevorzugt von 5 bis 100 µm.

Die Deckschicht 51 weist auf der der schichtförmigen Klebmasse 30 zugewandten Seite 53 eine Silikonbeschichtung auf, sie könnte aber auch eine beliebige andere klebstoffabweisende Oberfläche aufweisen. Die klebstoffabweisende Beschichtung ist vorteilhafterweise so gewählt ist, dass sie eine genügend hohe Dehäsion zum Epoxidharzsystem aufweist. Dies kann erforderlich sein, damit die PET-Folie vor dem Zusammenfügen mit der mikrofluidischen Kartusche entfernt werden kann. Dadurch kommt der Deckschicht 51 die Funktion einer Abziehfolie zu.

Darüber hinaus weist die Deckschicht 51 auf der der schichtförmigen Klebmasse 30 abgewandten Seite 55 eine Silikonbeschichtung auf. Alternativ kann die Deckschicht auch eine beliebige andere klebstoffabweisende Oberfläche aufweisen. Die Silikonbeschichtung auf der der schichtförmigen Klebmasse 30 abgewandten Seite 55 dient zu Lagerzwecken und erleichtert beispielsweise das Auf- und Abrollen der Kartuschenabdeckvorrichtung 10 für den Fall, dass letztere in Rollenform gelagert werden soll.

In Figur 3 ist schematisch eine Kartuschenabdeckvorrichtung 10 gezeigt, welche eine schichtförmige Klebmasse 30 umfasst, die der Klebmasse aus Figur 1 entspricht.

Die Kartuschenabdeckvorrichtung gemäß Figur 3 weist lediglich auf der zweiten Seite 34 der schichtförmigen Klebmasse 30 eine Deckschicht 51 in Form einer PET-Folie auf. Aufbau und Eigenschaften der in Figur 3 gezeigten Deckschicht 51 entsprechen denen der zweiten Deckschicht aus Figur 2. Da die Deckschicht 51 nicht im Produkt verbleibt, bestehen keine Anforderungen an Autofluoreszenzeigenschaften.

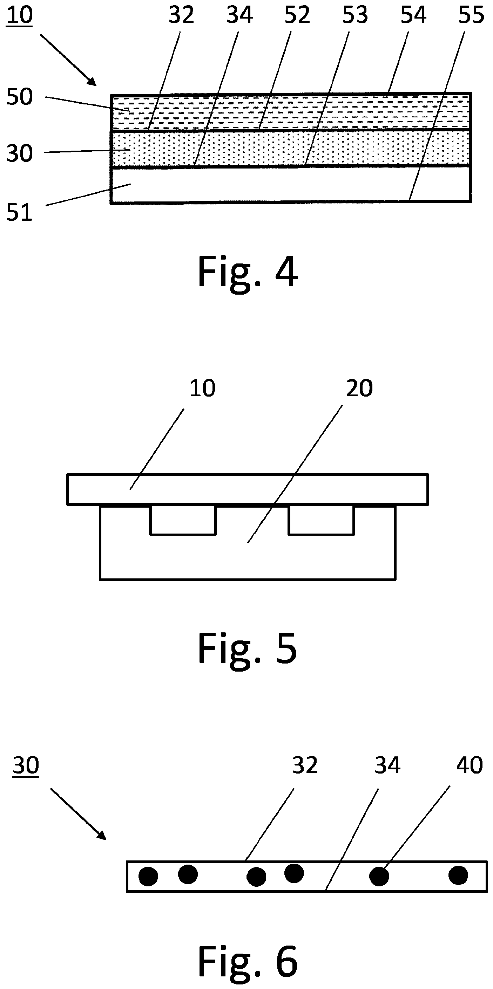

In Figur 4 ist schematisch eine Ausführungsform der Kartuschenabdeckvorrichtung 10 gezeigt, welche im Wesentlichen der Kartuschenabdeckvorrichtung aus Figur 1 entspricht.

Die in Figur 4 gezeigte Kartuschenabdeckvorrichtung unterscheidet sich dadurch von der Kartuschenabdeckvorrichtung gemäß Figur 1, dass die Deckschicht 50 in Form einer PET-Folie auf der der schichtförmigen Klebmasse 30 zugewandten Seite 52 eine Silikonbeschichtung aufweist. Alternativ kann die Deckschicht 50 auch eine beliebige andere klebstoffabweisende Oberfläche aufweisen.

Die klebstoffabweisende Beschichtung ist vorteilhafterweise so gewählt, dass sie eine genügend hohe Dehäsion aufweist, d.h. ohne äußere Beschädigung und ohne negative funktionelle Beeinträchtigung der Klebstoffoberfläche des Epoxidharzsystems manuell oder auch maschinell ohne größeren Kraftaufwand entfernbar ist. Dies kann erforderlich sein, damit die Deckschicht 50 vor dem Zusammenfügen mit der mikrofluidischen Kartusche entfernt werden kann. Die Deckschicht 50 weist auch auf der der schichtförmigen Klebmasse 30 abgewandten Seite 54 eine Silikonbeschichtung auf. Auch bei dieser Beschichtung kann es sich alternativ auch um eine beliebige andere klebstoffabweisende Oberfläche handeln.

Somit weist die Kartuschenabdeckvorrichtung 10 gemäß Figur 4 auf beiden Seiten der Klebmasse 30 eine entfernbare Deckschicht 50, 51 auf. Eine doppelte Abziehfolie kann besonders bei sehr hohen Qualitätsansprüchen an die Optik des Produktes hilfreich sein.

In Figur 5 ist schematisch eine Kartuschenabdeckvorrichtung 10 gezeigt, welche mit einer mikrofluidischen Kartusche 20 zusammengefügt ist. Die Kartusche 20 weist auf einer Oberseite Ausnehmungen, wie zum Beispiel Kavitäten, Kammern, Kanäle und der Gleichen auf, die dazu dienen, Reagenzien, wie zum Beispiel eines In-Vitro Assays aufzunehmen, um eine In-Vitro-Diagnostik durchführen zu können. Die Kartuschenabdeckvorrichtung 10 ist dabei derart auf der Kartusche 20 angeordnet, dass die Ausnehmungen in der Oberfläche der Kartusche 20 gegenüber der Umgebung versigelt sind.

In Figur 6 ist schematisch eine schichtförmige Klebmasse 30 gezeigt, die Füllkörper 40 in Form von Vollglaskugeln umfasst. Die maximale Abmessung der Füllkörper 40 ist kleiner als die Dicke der schichtförmigen Klebmasse 30. Die Füllkörper 40 wirken sich unter anderem vorteilhaft auf die elastischen Eigenschaften der schichtförmigen Klebmasse und auf die elastischen Eigenschaften der Kartuschenabdeckvorrichtung aus, was wiederum zu einer vorteilhaften Versiegelung der mikrofluidischen Kartusche führt.

Die schichtförmige Klebmasse 30 kann alternativ auch andere Füllkörper 40 umfassen, wie zum Beispiel Hohlglaskugeln und/oder Polymerkugeln. Es können aber auch Füllkörper 40 verwendet werden, die aus anderen Materialien bestehen, insbesondere keramische Füllkörper oder Füllkörper auf Polymerbasis. Es sind schematisch auch die erste Seite der schichtförmigen Klebmasse 32 und die zweite Seite der schichtförmigen Klebmasse 34 gezeigt.

Nachfolgend werden gewünschte Anforderungen an das Material (Silikonschicht, Träger, Klebstoffsystem) für den Gebrauch in der In-Vitro-Diagnostik aufgeführt.

Zur Replikation der Erreger-DNA ist ein zyklisches Aufheizen und Abkühlen erforderlich. Hierzu werden die Reagenzien in ca. 50-100 Zyklen für 30 sec. auf ca. 95°C erhitzt und anschließend wieder auf ca. 60°C abgekühlt. Das Folienmaterial und die Sieglung müssen diesen Temperaturzyklen standhalten. Vorteilhaft ist eine Temperaturbeständigkeit der Versiegelung bei ≥ 90°C ca. 50 - 100 mal für 20 Sekunden. Die Detektion der Ergebnisse erfolgt über Fluoreszenzspektroskopie. Für die Detektion vorteilhaft ist eine optisch transparente Versiegelung (Transmission > 90%) Nachfolgende Wellenlängen werden zur Detektion verwendet und sollten das Material unverändert passieren können:
Grün: Anregung: 470 ± 10 nm; Detektion: 510 ± 05 nm
Gelb: Anregung: 530 ± 05 nm; Detektion: 557 ± 05 nm
Orange: Anregung: 585 ± 05 nm; Detektion: 610 ± 05 nm
Rot: Anregung: 625 ± 05 nm; Detektion: 660 ± 10 nm
Crimson: Anregung: 680 ± 05 nm; Detektion: 712 ± 05 nm

Da die Detektion der Ergebnisse über Fluoreszenzspektroskopie erfolgt, sollte das Material auch keine Fluoreszenz im Bereich der Detektionswellenlängen aufweisen. Die Siegelnahtfestigkeit sollte bei 100°C einem Druck von 1 bar (entspricht 0,1 N/mm²) standhalten.

Die produktberührende Siegelschicht sollte keine Inhaltsstoffe aufweisen, die die Biochemie des Probenmaterials oder der Reagenzien beeinflusst.

Während des Prozesses werden unterschiedliche alkoholische Lösemittel eingesetzt. Daher ist eine chemische Stabilität gegen Lösemittel wie Ethanol oder Isopropanol (verdünnte Lösungen; 50 %) vorteilhaft.

Das Material sollte keine Versprödung zeigen und sollte nach der Herstellung biegbar (nicht knickbar) sein. Es sollte auch nach der Anwendung beim Entsorgen nicht brechen, damit keine Stoffe, wie beispielsweise Reagenzien oder Blut mit Erregern austreten können.

Bei der Verarbeitung der Folie sollten keine toxischen Substanzen entweichen, die eine schädliche Wirkung auf die Gesundheit des Bedienerpersonals haben.

Das Material sollte nur eine geringe Wasseraufnahme zeigen (Innerhalb der 2 Stunden Prozesszeit < 10 %). Je geringer die Wasseraufnahmefähigkeit, desto geringer die Gefahr, dass Erreger am Material anlagern bzw. hängen bleiben oder dass sich Materialeigenschaften verändern.

Um eine angemessene Prozessdurchlaufzeit zu gewährleisten, sollte nach 20 Sekunden ein ausreichender Halt der Siegelfolie auf der mikrofluidischen Kartusche 20 vorhanden sein, so dass diese in Anschluss verpackt werden kann. Die vollständige Aushärtung kann während Lagerung stattfinden.

Eine weitere optische Anforderung an den Klebstoff ist, dass bei der Aushärtung des Klebers keine Blasen entstehen sollten.

Die Abdeckung der mikrofluidischen Kartusche erfolgt im Reinraum, in welchem in der Regel eine niedrige Luftfeuchtigkeit von ca. 35-50 % rH herrscht.

### Bezugszeichenliste

- 10: Kartuschenabdeckvorrichtung
- 20: Mikrofluidische Kartusche
- 30: Schichtförmige Klebmasse
- 32: Erste Seite der schichtförmigen Klebmasse
- 34: Zweite Seite der schichtförmige Klebmasse
- 40: Füllkörper
- 50: Deckschicht
- 51: Deckschicht
- 52: Der schichtförmigen Klebmasse zugewandten Seite der Deckschicht
- 53: Der schichtförmigen Klebmasse zugewandten Seite der Deckschicht
- 54: Der schichtförmigen Klebmasse abgewandten Seite der Deckschicht
- 55: Der schichtförmigen Klebmasse abgewandten Seite der Deckschicht

## Patentansprüche

1. System mit einer mikrofluidischen Kartusche (20) und einer Kartuschenabdeckvorrichtung (10) zum Versiegeln der mikrofluidischen Kartusche (20), die Kartuschenabdeckvorrichtung (10) umfassend:
mindestens eine schichtförmige Klebmasse (30)
**dadurch gekennzeichnet, dass**
die schichtförmige Klebmasse (30) zum Einleiten ihrer Aushärtung UV-aktivierbar ist und nach Aktivierung bis zum Ablauf einer Offenzeit bei Raumtemperatur haftklebrig ist, wobei die schichtförmige Klebmasse (30) umfasst:
i. 2 - 40 Gew.-% Filmbildner,
ii. 10 - 70 Gew.-% aromatische Epoxidharze,
iii. cycloaliphatische Epoxidharze, wobei die cycloaliphatischen Epoxidharze 35 Gew.-% nicht überschreiten,
iv. 0,5 - 7 Gew.-% kationische Initiatoren,
v. 0 - 50 Gew.-% epoxidierter Polyetherverbindungen, und
vi. 0 - 20 Gew.-% Polyol,
wobei sich die Anteile zu 100% addieren.

2. System gemäß Anspruch 1, **dadurch gekennzeichnet, dass** die schichtförmige Klebmasse (30) eine Dicke aufweist von 2 bis 1.000 pm, bevorzugt von 5 bis 500 pm und besonders bevorzugt von 5 bis 100 pm.

3. System gemäß einem der vorhergehenden Ansprüche, **dadurch gekennzeichnet, dass** die schichtförmige Klebmasse (30) Füllkörper (40) umfasst, insbesondere keramische Füllkörper oder Füllkörper auf Polymerbasis.

4. System gemäß Anspruch 3, **dadurch gekennzeichnet, dass** die Füllkörper (40) Vollglaskugeln, Hohlglaskugeln und/oder Polymerkugeln sind.

5. System gemäß Anspruch 3 oder 4, **dadurch gekennzeichnet, dass** die maximale Abmessung eines Füllkörpers (40) kleiner ist, als die Dicke der schichtförmige Klebmasse (30).

6. System gemäß einem der vorhergehenden Ansprüche, **dadurch gekennzeichnet, dass** auf einer ersten Seite (32) der schichtförmigen Klebmasse (30) eine Deckschicht (50), bevorzugt eine Kunststofffolie angeordnet ist.

7. System gemäß einem der vorhergehenden Ansprüche, **dadurch gekennzeichnet, dass** auf einer zweiten Seite (34) der schichtförmigen Klebmasse (30) eine Deckschicht (51), insbesondere eine Abziehfolie, angeordnet ist.

8. System gemäß Anspruch 6 oder 7, **dadurch gekennzeichnet, dass** die Deckschicht (50, 51) auf der der schichtförmigen Klebmasse (30) zugewandten Seite (52, 53) und/oder der der schichtförmigen Klebmasse (30) abgewandten Seite (54, 55) eine klebstoffabweisende Beschichtung aufweist.

9. System gemäß einem der Ansprüche 6 bis 8, **dadurch gekennzeichnet, dass** die Deckschicht (50, 51) eine temperatur- und medienbeständige Folie, bevorzugt eine PET-Folie, eine PC-Folie oder eine COP-Folie ist.

10. Verfahren zur Herstellung eines Systems gemäß einem der Ansprüche 1 bis 9, umfassend die folgenden Schritte:
UV-Aktivierung der Kartuschenabdeckvorrichtung (10) Versiegeln der mikrofluidischen Kartusche (20) durch Zusammenfügen einer zweiten Seite der Kartuschenabdeckvorrichtung (10) mit der mikrofluidischen Kartusche innerhalb der Offenzeit der schichtförmigen Klebmasse (30), und Aushärten der Kartuschenabdeckvorrichtung (10) auf der mikrofluidischen Kartusche (20).

11. Verfahren gemäß Anspruch 10, **dadurch gekennzeichnet, dass** die UV-Aktivierung räumlich getrennt von der mikrofluidischen Kartusche (20) erfolgt.

12. Verfahren gemäß den Ansprüchen 10 oder 11, **dadurch gekennzeichnet, dass** die UV- Aktivierung vor oder während dem Fügen der Kartuschenabdeckvorrichtung (10) auf die mikrofluidische Kartusche (20) erfolgt.

## Claims

1. A system comprising a microfluidic cartridge (20) and a cartridge covering element (10) for sealing off the microfluidic cartridge (20), the cartridge covering element (10) comprising:
at least one stratified adhesive mass (30)
**characterized in that**
the stratified adhesive mass (30) is adapted to be UV-activatable to induce curing and adapted to be tacky after activation until expiration of an open time at room temperature, wherein the stratified adhesive mass (30) comprises:
i. 2 - 40 percent by weight of film former,
ii. 10 - 70 percent by weight of aromatic epoxy resins,
iii. cyclo-aliphatic epoxy resins, the cyclo-aliphatic resins not exceeding 35 percent by weight,
iv. 0,5 - 7 percent by weight of cationic initiators,
v. 0 - 50 percent by weight of epoxy-enhanced polyether compounds, and
vi. 0 - 20 percent by weight of polyol,
such that shares of the components by weight add up to 100 %.

2. System according to claim 1, **characterized in that** the stratified adhesive mass (30) has a thickness of 2 to 1.000 pm, preferably 5 to 500 pm and especially preferably 5 to100 pm.

3. System according to any of the preceding claims, **characterized in that** the stratified adhesive mass (30) comprises fillers (40), in particular ceramic fillers or polymer-based fillers.

4. System according to claim 3, **characterized in that** the fillers (40) are solid glass spheres, hollow glass spheres and/or polymer spheres.

5. System according to claim 3 or 4, **characterized in that** the maximum dimensions of a filler (40) are smaller than the thickness of the stratified adhesive mass (30).

6. System according to any of the preceding claims, **characterized in that** a cover layer (50), preferably a plastic foil, is arranged on a first side (32) of the stratified adhesive mass (30).

7. System according to any of the preceding claims, **characterized in that** a cover layer (51), in particular a release liner, is arranged on a second side (34) of the stratified adhesive mass (30).

8. System according to claim 6 or 7, **characterized in that** the cover layer (50, 51) has an adhesive-repellent coating on a side (52, 53) facing the stratified adhesive mass (30) and/or on a side (54, 55) facing away from the stratified adhesive mass (30).

9. System according to one of the claims 6 to 8, **characterized in that** the cover layer (50, 51) is a temperature- and media-resistant film, preferably a PET foil, a PC foil or a COP foil.

10. A method for manufacturing a system according to one of the claims 1 to 9, comprising the following steps:
UV-activation of the cartridge covering element (10),
sealing off the microfluidic cartridge (20) by joining a second side of the cartridge covering element (10) and the microfluidic cartridge within the open time of the stratified adhesive mass (30), and
curing the cartridge covering element (10) on the microfluidic cartridge (20).

11. Method according to claim 10, **characterized in that** the UV-activation takes place spatially separated from the microfluidic cartridge (20).

12. Method according to claim 10 or 11, **characterized in that** the UV-activation takes place prior or during the joining of the cartridge covering element (10) and the microfluidic cartridge (20).

## Revendications

1. Un système comprenant une cartouche microfluidique (20) et un élément de recouvrement de cartouche (10) pour sceller la cartouche microfluidique (20), l'élément de recouvrement de cartouche (10) comprenant:
au moins une masse adhésive stratifiée (30)
**caractérisée en ce que**
la masse adhésive stratifiée (30) est conçue pour être activable par UV pour induire un durcissement et pour être collante après activation jusqu'à l'expiration d'un temps ouvert à température ambiante, la masse adhésive stratifiée (30) comprenant:
i. 2 à 40 pour cent en poids d'agent filmogène,
ii. 10 à 70 pour cent en poids de résines époxy aromatiques,
iii. des résines époxy cycloaliphatiques, les résines cycloaliphatiques ne dépassant pas 35 pour cent en poids,
iv. 0,5 à 7 pour cent en poids d'initiateurs cationiques,
v. 0 à 50 pour cent en poids de composés polyéthers renforcés à l'époxy, et
vi. 0 à 20 pour cent en poids de polyol,
de telle sorte que les parts pondérales des composants totalisent 100 %.

2. Un système selon la revendication 1, **caractérisé en ce que** la masse adhésive stratifiée (30) présente une épaisseur de 2 à 1000 pm, de préférence de 5 à 500 pm et de manière particulièrement préférée de 5 à 100 pm.

3. Un système selon l'une quelconque des revendications précédentes, **caractérisé en ce que** la masse adhésive stratifiée (30) comprend des charges (40), en particulier des charges céramiques ou des charges à base de polymère.

4. Un système selon la revendication 3, **caractérisé en ce que** les charges (40) sont des billes de verre pleines, des billes de verre creuses et/ou des billes de polymère.

5. Un système selon la revendication 3 ou 4, **caractérisé en ce que** les dimensions maximales d'une charge (40) sont inférieures à l'épaisseur de la masse adhésive stratifiée (30).

6. Un système selon l'une quelconque des revendications précédentes, **caractérisé en ce qu'**une couche de recouvrement (50), de préférence une feuille de matière plastique, est disposée sur un premier côté (32) de la masse adhésive stratifiée (30).

7. Un système selon l'une quelconque des revendications précédentes, **caractérisé en ce qu'**une couche de recouvrement (51), notamment une pellicule antiadhésive, est disposée sur une deuxième face (34) de la masse adhésive stratifiée (30).

8. Un système selon la revendication 6 ou 7, **caractérisé en ce que** la couche de recouvrement (50, 51) présente un revêtement antiadhésif sur une face (52, 53) tournée vers la masse adhésive stratifiée (30) et/ou sur une face (54, 55) opposée à la masse adhésive stratifiée (30).

9. Un système selon l'une des revendications 6 à 8, **caractérisé en ce que** la couche de recouvrement (50, 51) est un film résistant à la température et aux milieux, de préférence une feuille PET, une feuille PC ou une feuille COP.

10. Un procédé de fabrication d'un système selon l'une des revendications 1 à 9, comprenant les étapes suivantes:
activation par UV de l'élément de recouvrement de cartouche (10),
fermeture de la cartouche microfluidique (20) par jonction d'un deuxième côté de l'élément de recouvrement de cartouche (10) et de la cartouche microfluidique pendant le temps ouvert de la masse adhésive stratifiée (30), et durcissement de l'élément de recouvrement de cartouche (10) sur la cartouche microfluidique (20).

11. Un procédé selon la revendication 10, **caractérisé en ce que** l'activation par UV a lieu spatialement à distance de la cartouche microfluidique (20).

12. Un procédé selon la revendication 10 ou 11, **caractérisé en ce que** l'activation par UV a lieu avant ou pendant la jonction de l'élément de recouvrement de cartouche (10) et de la cartouche microfluidique (20).
